# FASCICULE DE BREVET EUROPEEN

(11) **EP 4 226 028 B1**
(45) Date de publication et mention de la délivrance du brevet: **17.07.2024**
(21) Numéro de dépôt: 21786221.8
(22) Date de dépôt: 01.10.2021
(51) Int. Cl.: F02C 7/047, F02K 7/10

(54) **ENTRÉE D'AIR SUPERSONIQUE D'UN ENSEMBLE PROPULSIF D'AÉRONEF COMPRENANT UN DISPOSITIF DE DÉGIVRAGE DES BRAS DE SUPPORT ET PROCÉDÉ DE DÉGIVRAGE**
ÜBERSCHALL-LUFTEINLASS EINER FLUGZEUGANTRIEBSANORDNUNG MIT EINER VORRICHTUNG ZUR ENTEISUNG DER STÜTZARME UND ENTEISUNGSVERFAHREN
SUPERSONIC AIR INTAKE OF AN AIRCRAFT PROPULSION ASSEMBLY COMPRISING A DEVICE FOR DE-ICING THE SUPPORT ARMS AND DE-ICING METHOD

(30) Priorité: 08.10.2020 FR 2010292
(43) Date de publication de la demande: 16.08.2023
(73) Titulaire: Safran Nacelles, 76700 Gonfreville-l'Orcher (FR)
(72) Inventeur: JORET, Jean-Philippe, 77550 MOISSY-CRAMAYEL (FR); KIOUA, Hazem, 77550 MOISSY-CRAMAYEL (FR); LESTEVEN, Emmanuel, 77550 MOISSY-CRAMAYEL (FR)
(74) Mandataire: Argyma
(86) Numéro de dépôt international: PCT/EP2021/077196
(87) Numéro de publication internationale: WO 2022/073889

(56) Documents cités:
- FR-A- 967 835
- FR-A- 983 998
- GB-A- 885 908

## Description

### Domaine technique

La présente invention concerne le domaine du dégivrage d'une entrée d'air supersonique, et plus particulièrement des bras de support, d'un ensemble propulsif d'aéronef.

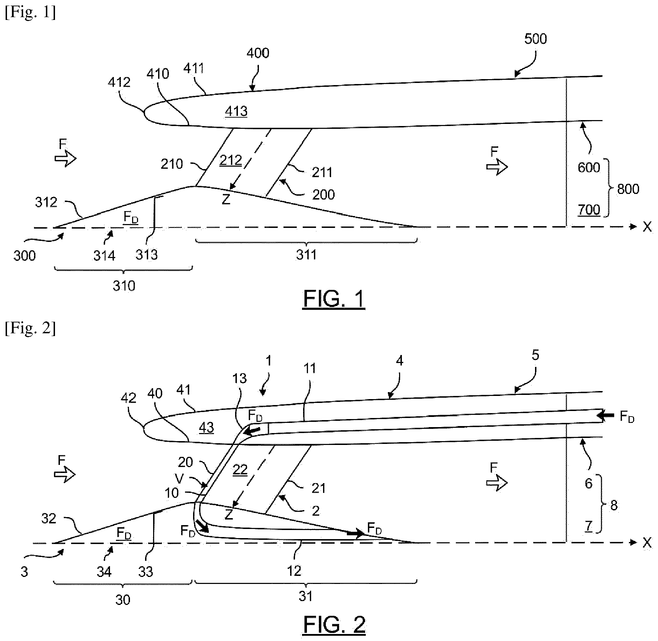

De manière connue, en référence à la [Fig.1], un ensemble propulsif d'aéronef supersonique 800 s'étend longitudinalement selon un axe X orienté d'amont en aval et comprend une turbomachine 700 et une nacelle 600 d'axe longitudinal X. La turbomachine 700 est configurée pour permettre la propulsion de l'aéronef à des vitesses supersoniques à partir de l'accélération d'un flux d'air F subsonique circulant d'amont en aval dans la turbomachine 700. La turbomachine 700 comprend classiquement les éléments suivants, non représentés et cités d'amont en aval : une soufflante, un (ou plusieurs) compresseur(s), une chambre de combustion et une (ou plusieurs) turbine(s). La nacelle 600 s'étend quant à elle extérieurement autour de la turbomachine 700 et comprend à son extrémité amont une entrée d'air supersonique 500. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

De manière connue, comme illustré sur la [Fig.1], l'entrée d'air supersonique 500 comprend une canalisation 400 d'axe longitudinal X configurée pour guider le flux d'air F dans la turbomachine 700. La canalisation 400 comprend une paroi intérieure 410 et une paroi extérieure 411 reliées par une lèvre d'entrée d'air 412 à l'amont et délimitant ensemble une cavité annulaire 413. L'entrée d'air 500 comprend également un atténuateur de vitesse 300 s'étendant fixe à l'intérieur de la canalisation 400 selon l'axe longitudinal X ainsi que des bras de support 200 reliant l'atténuateur de vitesse 300 à la canalisation 400.

De manière connue, en référence à la [Fig.1], l'atténuateur de vitesse 300 comprend classiquement une portion amont 310 de section croissante d'amont en aval et une portion aval 311 de section décroissante d'amont en aval. La portion amont 310 comporte une paroi externe conique 312 avec un bord effilé s'étendant en saillie de la canalisation 400 de manière à générer une onde de choc réduisant la vitesse supersonique du flux d'air F entrant dans la canalisation 400 en une vitesse subsonique.

De manière connue, toujours en référence à la [Fig.1], chaque bras de support 200 s'étend de la paroi intérieure 410 de la canalisation 400 jusqu'à l'atténuateur de vitesse 300, au niveau de sa portion aval 311 dans cet exemple, selon un axe Z orienté vers l'intérieur et vers l'amont par rapport à l'axe longitudinal X. Dans cet exemple, chaque bras de support 200 comprend une paroi externe amont 210 et une paroi externe aval 211 de section en forme de U respectivement ouvertes vers l'aval et vers l'amont, de manière à délimiter ensemble une cavité 212 cylindrique de section ovale.

En pratique, du givre est susceptible de se former et de s'accumuler sur la paroi externe conique 312 de l'atténuateur de vitesse 300 et sur la paroi externe amont 210 des bras de support 200, ce qui perturbe l'admission du flux d'air F dans la canalisation 400. Comme illustré sur la [Fig.1], pour l'éviter, il est connu d'ajouter une cloison interne 313 dans la portion amont 310 de l'atténuateur de vitesse 300, de manière à délimiter avec la paroi externe conique 312 une cavité 314 dans laquelle circule un flux d'air de dégivrage F_{D} pour réchauffer la paroi externe conique 312 par échanges thermiques. Le flux d'air de dégivrage F_{D} est classiquement prélevé et refoulé dans la turbomachine 700, notamment dans le compresseur, et acheminé par des conduites (non représentées).

Dans les faits, une telle solution permet uniquement le dégivrage de l'atténuateur de vitesse 300. Une telle solution n'est en outre pas transposable aux bras de support 200. En effet, la paroi externe amont 210 est étendue ce qui nécessiterait une cavité de volume trop important pour permettre un dégivrage efficace. Par ailleurs, les bras de support 200 comprennent en pratique des pièces structurales pour permettre le maintien de l'atténuateur de vitesse 300 ainsi que les conduites d'acheminement du flux d'air de dégivrage F_{D} vers l'atténuateur de vitesse 300, ce qui ne permet pas une intégration aisée.

L'invention vise ainsi à dégivrer de manière efficace et pratique les bras de support d'une entrée d'air supersonique d'un ensemble propulsif d'aéronef.

Dans l'art antérieur, on connaît par les demandes de brevet GB885908A et FR983998A des entrées d'air supersonique et subsonique.

### PRESENTATION DE L'INVENTION

L'invention concerne une entrée d'air supersonique d'un ensemble propulsif d'aéronef, ledit ensemble propulsif d'aéronef s'étendant longitudinalement selon un axe orienté d'amont en aval et comprenant une turbomachine configurée pour permettre la propulsion de l'aéronef à des vitesses supersoniques à partir de l'accélération d'un flux d'air subsonique circulant d'amont en aval dans la turbomachine, ladite entrée d'air supersonique comprenant :
- une canalisation d'axe longitudinal comprenant une paroi intérieure configurée pour guider le flux d'air dans la turbomachine et une paroi extérieure reliées à l'amont par une lèvre d'entrée d'air et délimitant ensemble une cavité annulaire,
- un atténuateur de vitesse monté fixe à l'intérieur de la canalisation selon l'axe longitudinal et comprenant une paroi externe conique avec un bord effilé à l'amont de manière à générer une onde de choc réduisant la vitesse supersonique du flux d'air entrant dans la canalisation en une vitesse subsonique, et
- au moins un bras de support reliant l'atténuateur de vitesse à la canalisation, ledit bras de support comprenant une paroi externe amont et une paroi externe aval délimitant ensemble une cavité s'étendant de la paroi intérieure de la canalisation jusqu'à l'atténuateur de vitesse selon un axe orienté vers l'intérieur.

L'invention est remarquable en ce que l'entrée d'air supersonique comprend au moins un dispositif de dégivrage comprenant :
- une paroi interne montée dans la cavité du bras de support en vis-à-vis de la paroi externe amont de manière à délimiter ensemble un volume de dégivrage calibré,
- au moins un organe d'alimentation en flux d'air de dégivrage du volume de dégivrage, et
- au moins un organe de refoulement du flux d'air de dégivrage du volume de dégivrage.

Le dispositif de dégivrage de l'invention permet avantageusement de dégivrer les bras de support d'une entrée d'air supersonique d'un ensemble propulsif d'aéronef, par circulation d'air chaud, à savoir un flux d'air de dégivrage, contre la paroi à dégivrer, à savoir la paroi externe amont. Le flux d'air de dégivrage circule de plus dans un volume de dégivrage calibré, de dimensions restreintes, pour concentrer le flux d'air de dégivrage au plus près de la paroi et donc favoriser les échanges thermiques. Ceci permet d'éliminer de manière efficace et simple le givre formé et de prévenir son apparition. En outre, le volume de dégivrage est délimité par simple ajout d'une paroi interne en vis-à-vis de la paroi externe amont, qui est ainsi facilement intégrable dans les bras de support qui comprennent classiquement des pièces structurales pour permettre leur maintien et des conduites d'acheminement de flux d'air de dégivrage vers l'atténuateur de vitesse.

De préférence, l'organe d'alimentation se présente sous la forme d'une conduite d'alimentation. De préférence également, l'organe de refoulement se présente sous la forme d'une conduite de refoulement.

De préférence, l'atténuateur de vitesse comporte un bord effilé amont qui est unique et fermé.

Selon un aspect préféré, l'entrée d'air supersonique comprend un nombre égal de bras de support et de dispositifs de dégivrage, une paroi interne étant montée dans la cavité de chaque bras de support, afin de dégivrer chaque bras de support.

Selon un aspect de l'invention, la paroi interne du dispositif de dégivrage comprend une portion de guidage du flux d'air de dégivrage de forme sensiblement identique à celle de la paroi externe amont du bras de support. On précise que par « sensiblement identique », on entend que la forme de la portion de guidage varie d'au plus 20% de celle de la portion externe amont. Autrement dit, la portion de guidage suit les contours de la paroi externe amont de manière à limiter les dimensions du volume de dégivrage et à concentrer la circulation du flux d'air de dégivrage au contact de la paroi externe amont.

Selon un aspect préféré, la paroi interne du dispositif de dégivrage comprend une portion de fixation fixée à la jointure de la paroi externe amont et de la paroi externe aval, afin de maintenir la paroi interne. En outre, le flux d'air de dégivrage est ainsi au contact de l'ensemble de la paroi externe amont du bras de support.

Selon un aspect de l'invention, le volume de dégivrage comporte une surface transversale de valeur sensiblement constante le long de l'axe du bras de support de manière à conserver la vitesse du flux d'air de dégivrage et par suite favoriser les échanges thermiques avec la paroi externe amont. Par « sensiblement constante », on entend que la surface transversale varie d'au plus 20% le long de l'axe du bras de support.

De préférence, le volume de dégivrage comporte une surface transversale en forme de U tourné vers l'aval. Autrement dit, la paroi externe amont et la portion de guidage comportent chacune une section transversale de forme en U tourné vers l'aval. Le volume de dégivrage s'étend ainsi uniquement au niveau du pourtour amont de la cavité du bras de support tandis que la partie centrale du bras de support loge classiquement des pièces structurales pour assurer son maintien et une conduite d'acheminement de flux d'air de dégivrage vers l'atténuateur de vitesse.

De préférence, le volume de dégivrage comporte une épaisseur, définie comme la distance radiale séparant la paroi externe amont de la paroi interne par rapport à l'axe du bras de support, qui est sensiblement constante sur une surface transversale du volume de dégivrage. Préférentiellement, l'épaisseur est inférieure à 30mm et supérieure à 2mm pour garantir une vitesse suffisante du flux d'air de dégivrage.

Selon un aspect de l'invention, le volume de dégivrage s'étend selon l'axe du bras de support entre une ouverture extérieure formée dans la paroi intérieure de la canalisation et une ouverture intérieure formée dans la paroi de l'atténuateur de vitesse, de préférence respectivement d'entrée et de sortie pour le flux d'air de dégivrage. Autrement dit, du flux d'air de dégivrage circule au contact de toute la longueur de la paroi externe amont pour un dégivrage global et complet.

De préférence, l'organe d'alimentation est logé dans la cavité annulaire de la canalisation. Une telle disposition permet de prélever le flux d'air de dégivrage dans la turbomachine, classiquement au niveau du compresseur, et de l'acheminer de manière simple et pratique dans le bras de support via la canalisation. De préférence, l'organe de refoulement est logé dans l'atténuateur de vitesse. Une telle disposition permet de refouler le flux d'air de dégivrage dans le flux d'air admis dans la turbomachine en aval de l'atténuateur de vitesse de manière simple et pratique.

Selon un aspect de l'invention, le dispositif de dégivrage comprend un organe de connexion fluidique de section évolutive comprenant une ouverture d'entrée débouchant dans l'organe d'alimentation et une ouverture de sortie débouchant dans une ouverture du volume de dégivrage, de préférence l'ouverture extérieure. Un tel organe de connexion fluidique permet avantageusement de relier fluidiquement l'organe d'alimentation et le volume de dégivrage, sa section évolutive permettant de favoriser la circulation du flux d'air de dégivrage. Plus précisément, la section évolutive permet de passer progressivement de la section de l'organe d'alimentation, classiquement circulaire, à la section du volume de dégivrage, de préférence en forme de U, en limitant les pertes de charge pour optimiser la vitesse du flux d'air de dégivrage et par suite les échanges thermiques avec la paroi externe amont.

De préférence, l'organe de connexion fluidique comporte une ouverture d'entrée de section circulaire coopérant avec l'organe d'alimentation. De préférence, l'organe de connexion fluidique comporte une ouverture de sortie de section en forme de U coopérant avec une ouverture du volume de dégivrage, de préférence l'ouverture extérieure.

Selon un aspect de l'invention, l'organe de connexion fluidique comporte une surface transversale de valeur sensiblement constante sur toute sa longueur, de préférence égale à la valeur de la surface transversale du volume de dégivrage, préférentiellement égale à la valeur de la surface transversale de l'organe d'alimentation. On précise que par « sensiblement constante », on entend que la surface transversale de l'organe de connexion fluidique varie d'au plus 20%. Autrement dit, l'organe de connexion fluidique comporte une forme travaillée, à savoir de section évolutive et de surface transversale constante, pour éviter toute réduction de vitesse du flux d'air de dégivrage et ainsi favoriser les échanges thermiques.

Selon un premier aspect de l'invention, l'organe de connexion fluidique se présente sous la forme d'un conduit creux délimitant la section évolutive de l'organe de connexion fluidique. Autrement dit, l'organe de connexion fluidique comporte uniquement un conduit creux et est exempt d'élément de volume logé dans le conduit, la forme du conduit étant travaillée pour avoir une section évolutive.

Selon un deuxième aspect de l'invention, l'organe de connexion fluidique comprend un conduit creux et au moins un élément de volume logé dans le conduit creux de manière à délimiter ensemble la section évolutive de l'organe de connexion fluidique. L'élément de volume permet avantageusement d'utiliser un conduit de forme simplifiée. De préférence, l'élément de volume est unique pour favoriser la circulation du flux d'air de dégivrage.

Selon un troisième aspect de l'invention, l'atténuateur de vitesse comprend une cloison interne délimitant avec la paroi externe conique une cavité, l'organe de connexion fluidique comprenant une ouverture de sortie auxiliaire configurée pour alimenter la cavité de l'atténuateur de vitesse en flux d'air de dégivrage. Autrement dit, l'organe de connexion fluidique comprend une ouverture de sortie débouchant dans le volume de dégivrage et une ouverture de sortie auxiliaire pour acheminer du flux d'air de dégivrage dans la cavité de l'atténuateur de vitesse. L'organe de connexion fluidique comporte ainsi deux ouvertures de sortie pour le dégivrage du bras de support et de l'atténuateur de vitesse.

De préférence, l'ouverture de sortie auxiliaire s'étend intérieurement à l'ouverture de sortie, c'est à dire radialement intérieur par rapport à l'axe du bras. De préférence, l'ouverture de sortie comporte une section en forme en U et l'ouverture de sortie auxiliaire une section circulaire logée entre les branches du U pour un encombrement minimal.

De préférence, l'organe de connexion fluidique comporte deux éléments de volume pour délimiter de part et d'autre l'ouverture de sortie auxiliaire, de préférence un à l'amont et un à l'aval de l'ouverture de sortie auxiliaire, afin de la séparer de l'ouverture de sortie débouchant sur le volume de dégivrage.

L'invention concerne également une nacelle d'ensemble propulsif d'aéronef, ledit ensemble propulsif d'aéronef s'étendant longitudinalement selon un axe orienté d'amont en aval et comprenant une turbomachine configurée pour permettre la propulsion de l'aéronef à des vitesses supersoniques à partir de l'accélération d'un flux d'air subsonique circulant d'amont en aval dans la turbomachine, ladite nacelle s'étendant extérieurement autour de la turbomachine et comprenant à son extrémité amont une entrée d'air supersonique telle que décrite précédemment.

L'invention concerne en outre un ensemble propulsif d'aéronef s'étendant longitudinalement selon un axe orienté d'amont en aval et comprenant une turbomachine configurée pour permettre la propulsion de l'aéronef à des vitesses supersoniques à partir de l'accélération d'un flux d'air subsonique circulant d'amont en aval dans la turbomachine, ledit ensemble propulsif d'aéronef comprenant une nacelle telle que décrite précédemment.

L'invention concerne par ailleurs un procédé de dégivrage d'au moins un bras de support d'une entrée d'air supersonique d'ensemble propulsif d'aéronef telle que décrite précédemment, ledit procédé comprenant :
- une étape d'alimentation du volume de dégivrage en flux d'air de dégivrage par l'organe d'alimentation,
- une étape de circulation du flux d'air de dégivrage dans le volume de dégivrage, de manière à réchauffer la paroi externe amont du bras de support par échanges thermiques, afin de la dégivrer, et
- une étape de refoulement du flux d'air de dégivrage dans l'organe de refoulement hors du volume de dégivrage.

De manière avantageuse, un tel procédé de dégivrage permet de dégivrer de manière simple, pratique et efficace les bras de support d'une entrée d'air supersonique en faisant circuler de l'air chaud localement contre la paroi à dégivrer afin de la réchauffer.

De préférence, l'étape d'alimentation est mise en oeuvre par l'organe de connexion fluidique de section évolutive de manière à garantir une vitesse suffisante du flux d'air de dégivrage dans le volume de dégivrage.

De préférence, lors de l'étape d'alimentation, l'organe de connexion fluidique alimente également la cavité de l'atténuateur de vitesse en flux d'air de dégivrage grâce à l'ouverture de sortie auxiliaire. Un tel procédé permet avantageusement de dégivrer à la fois les bras de support et l'atténuateur de vitesse avec une alimentation combinée.

L'invention concerne par ailleurs une entrée d'air supersonique d'un ensemble propulsif d'aéronef, ledit ensemble propulsif d'aéronef s'étendant longitudinalement selon un axe orienté d'amont en aval et comprenant une turbomachine configurée pour permettre la propulsion de l'aéronef à des vitesses supersoniques à partir de l'accélération d'un flux d'air subsonique circulant d'amont en aval dans la turbomachine, ladite entrée d'air supersonique comprenant :
- une canalisation d'axe longitudinal comprenant une paroi intérieure configurée pour guider le flux d'air dans la turbomachine et une paroi extérieure reliées à l'amont par une lèvre d'entrée d'air et délimitant ensemble une cavité annulaire,
- un atténuateur de vitesse monté fixe à l'intérieur de la canalisation selon l'axe longitudinal et comprenant une paroi externe conique avec un bord effilé à l'amont de manière à générer une onde de choc réduisant la vitesse supersonique du flux d'air entrant dans la canalisation en une vitesse subsonique, et
- au moins un bras de support reliant l'atténuateur de vitesse à la canalisation, ledit bras de support comprenant une paroi externe amont et une paroi externe aval délimitant ensemble une cavité s'étendant de la paroi intérieure de la canalisation jusqu'à l'atténuateur de vitesse selon un axe orienté vers l'intérieur,
- au moins un dispositif de dégivrage comprenant :
   - une paroi interne montée dans la cavité du bras de support en vis-à-vis de la paroi externe amont de manière à délimiter ensemble un volume de dégivrage calibré,
   - au moins une cloison interne montée intérieurement à la paroi interne de manière solidaire afin de délimiter ensemble un volume d'approvisionnement, ladite paroi interne comprenant en amont de la cloison interne au moins une portion perforée afin de mettre en communication fluidique le volume d'approvisionnement et le volume de dégivrage calibré,
   - au moins un organe d'alimentation en flux d'air de dégivrage du volume d'approvisionnement, de manière à alimenter le volume de dégivrage pour dégivrer le bras de support, et
   - au moins un organe de refoulement du flux d'air de dégivrage du volume de dégivrage.

De manière avantageuse, un tel dispositif de dégivrage permet de faire circuler du flux d'air de dégivrage au plus près de la paroi externe amont et avec une vitesse suffisante pour favoriser les échanges thermiques entre le flux d'air de dégivrage et la paroi externe amont et ainsi favoriser le dégivrage. Un tel dispositif de dégivrage permet ainsi de dégivrer efficacement la paroi externe amont et d'y prévenir l'apparition de givre.

De préférence, le volume d'approvisionnement s'étend de la paroi intérieure de la canalisation selon un axe orienté vers l'intérieur, préférentiellement jusqu'à l'atténuateur de vitesse supersonique. De préférence, le volume d'approvisionnement comporte une section semi-ellipsoïdale avec un bord incurvé orienté vers l'amont, préférentiellement effilé.

De préférence, le dispositif de dégivrage comprend un organe de connexion fluidique de section évolutive comprenant une ouverture d'entrée débouchant dans l'organe d'alimentation et une ouverture de sortie débouchant dans le volume d'approvisionnement. Un tel organe de connexion fluidique permet avantageusement de relier fluidiquement l'organe d'alimentation et le volume d'approvisionnement, sa section évolutive permettant de favoriser la circulation du flux d'air de dégivrage. Plus précisément, la section évolutive permet de passer progressivement de la section de l'organe d'alimentation, classiquement circulaire, à la section du volume d'approvisionnement, en limitant les pertes de charge pour optimiser la vitesse du flux d'air de dégivrage.

De préférence, l'organe de connexion fluidique comporte une ouverture d'entrée de section circulaire coopérant avec l'organe d'alimentation. De préférence, l'organe de connexion fluidique comporte une ouverture de sortie de section semi-ellipsoïdale avec un bord incurvé orienté vers l'amont, préférentiellement effilé, coopérant avec le volume d'approvisionnement.

De préférence, l'organe de connexion fluidique comporte une surface transversale de valeur sensiblement constante sur toute sa longueur, de préférence égale à la valeur de la surface transversale du volume d'approvisionnement, préférentiellement égale à la valeur de la surface transversale de l'organe d'alimentation. On précise que par « sensiblement constante », on entend que la surface transversale de l'organe de connexion fluidique varie d'au plus 20%. De préférence, l'organe de connexion fluidique se présente sous la forme d'un conduit creux.

L'invention concerne également une nacelle d'ensemble propulsif d'aéronef, ledit ensemble propulsif d'aéronef s'étendant longitudinalement selon un axe orienté d'amont en aval et comprenant une turbomachine configurée pour permettre la propulsion de l'aéronef à des vitesses supersoniques à partir de l'accélération d'un flux d'air subsonique circulant d'amont en aval dans la turbomachine, ladite nacelle s'étendant extérieurement autour de la turbomachine et comprenant à son extrémité amont une entrée d'air supersonique telle que décrite précédemment.

L'invention concerne en outre un ensemble propulsif d'aéronef s'étendant longitudinalement selon un axe orienté d'amont en aval et comprenant une turbomachine configurée pour permettre la propulsion de l'aéronef à des vitesses supersoniques à partir de l'accélération d'un flux d'air subsonique circulant d'amont en aval dans la turbomachine, ledit ensemble propulsif d'aéronef comprenant une nacelle telle que décrite précédemment.

L'invention concerne par ailleurs un procédé de dégivrage d'au moins un bras de support d'une entrée d'air supersonique d'ensemble propulsif d'aéronef telle que décrite précédemment, ledit procédé comprenant :
- une étape d'alimentation du volume d'approvisionnement en flux d'air de dégivrage par l'organe d'alimentation,
- une étape de circulation du flux d'air de dégivrage du volume d'approvisionnement vers le volume de dégivrage en traversant la portion perforée de la paroi interne, de manière à réchauffer la paroi externe amont du bras de support par échanges thermiques, afin de la dégivrer, et
- une étape de refoulement du flux d'air de dégivrage dans l'organe de refoulement hors du volume de dégivrage.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
[Fig.1] La [Fig.1] est une représentation en demi-coupe longitudinale d'une entrée d'air supersonique d'ensemble propulsif d'aéronef selon l'art antérieur ;
[Fig.2] La [Fig.2] est une représentation en demi-coupe longitudinale d'une entrée d'air supersonique d'ensemble propulsif d'aéronef comprenant un dispositif de dégivrage selon une forme de réalisation de l'invention ;
[Fig.3] La [Fig.3] est une représentation en perspective d'un bras de support de l'entrée d'air de la [Fig.2] ;
[Fig.4] La [Fig.4] est une représentation en coupe transversale du bras de support de la [Fig.3] ;
[Fig.5] La [Fig.5] est une représentation en perspective d'un organe de connexion fluidique de l'entrée d'air de la [Fig.2] ;
[Fig.6] La [Fig.6] est une représentation en vue éclatée de l'organe de connexion fluidique de la [Fig.5] ;
[Fig.7] La [Fig.7] est une représentation de quatre coupes transversales de l'organe de connexion fluidique de la [Fig.5] ;
[Fig.8A] La [Fig.8A] est une représentation en perspective d'un organe de connexion fluidique selon une forme de réalisation alternative de l'invention ;
[Fig.8B] La [Fig.8B] est une représentation en vue éclatée de l'organe de connexion fluidique de la [Fig.8A] ;
[Fig.8C] La [Fig.8C] est une représentation de trois coupes transversales de l'organe de connexion fluidique de la [Fig.8A] ;
[Fig.9A] La [Fig.9A] est une représentation en perspective d'un organe de connexion fluidique selon une forme de réalisation alternative de l'invention ;
[Fig.9B] La [Fig.9B] est une représentation de trois coupes transversales de l'organe de connexion fluidique de la [Fig.9A] ;
[Fig.10] La [Fig.10] est une représentation schématique des étapes du procédé de dégivrage d'un bras de support selon un mode de réalisation de l'invention ;
[Fig.11A] La [Fig.11A] est une représentation en perspective d'un bras de support d'entrée d'air selon une forme de réalisation alternative de l'invention ;
[Fig.11B] La [Fig.11B] est une représentation en coupe transversale du bras de support de la [Fig.11A] ; et
[Fig.11C] La [Fig.11C] est une représentation en perspective d'un organe de connexion fluidique au bras de support de la [Fig.11A].

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la [Fig.2] et comme décrit dans le préambule, un ensemble propulsif d'aéronef supersonique 8 s'étend longitudinalement selon un axe X orienté d'amont en aval et comprend une turbomachine 7 et une nacelle 6 d'axe longitudinal X. La turbomachine 7 est configurée pour permettre la propulsion de l'aéronef à des vitesses supersoniques à partir de l'accélération d'un flux d'air F subsonique circulant d'amont en aval dans la turbomachine 7. La turbomachine 7 comprend classiquement les éléments suivants, non représentés et cités d'amont en aval : une soufflante, un (ou plusieurs) compresseur(s), une chambre de combustion et une (ou plusieurs) turbine(s). La nacelle 6 s'étend quant à elle extérieurement autour de la turbomachine 7 et comprend à son extrémité amont une entrée d'air supersonique 5. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

Comme illustré sur la [Fig.2] et décrit dans le préambule, l'entrée d'air supersonique 5 comprend une canalisation 4 d'axe longitudinal X configurée pour guider le flux d'air F dans la turbomachine 7. La canalisation 4 comprend une paroi intérieure 40 et une paroi extérieure 41 reliées par une lèvre d'entrée d'air 42 à l'amont et délimitant ensemble une cavité annulaire 43. L'entrée d'air supersonique 5 comprend également un atténuateur de vitesse 3 s'étendant fixe à l'intérieur de la canalisation 4 selon l'axe longitudinal X ainsi que des bras de support 2 reliant l'atténuateur de vitesse 3 à la canalisation 4.

En référence à la [Fig.2] et comme décrit dans le préambule, l'atténuateur de vitesse 3 comprend classiquement une portion amont 30 de section croissante d'amont en aval et une portion aval 31 de section décroissante d'amont en aval. La portion amont 30 comporte une paroi externe conique 32 avec un bord effilé s'étendant en saillie de la canalisation 4 de manière à générer une onde de choc réduisant la vitesse supersonique du flux d'air F entrant dans la canalisation 4 en une vitesse subsonique. En pratique, du givre est susceptible de se former et de s'accumuler sur la paroi externe conique 32. Pour l'éviter, une cloison interne 33 est classiquement ajoutée dans la portion amont 30 de l'atténuateur de vitesse 3, de manière à délimiter avec la paroi externe conique 32 une cavité 34 dans laquelle circule un flux d'air de dégivrage F_{D} pour réchauffer la paroi externe conique 32 par échanges thermiques. Le flux d'air de dégivrage F_{D} est classiquement prélevé et refoulé dans la turbomachine 7, notamment dans le compresseur, et acheminé par des conduites (non représentées).

Toujours en référence à la [Fig.2] et comme décrit dans le préambule, chaque bras de support 2 s'étend de la paroi intérieure 40 de la canalisation 4 jusqu'à l'atténuateur de vitesse 3, au niveau de sa portion aval 31 dans cet exemple, selon un axe Z orienté vers l'intérieur et vers l'amont par rapport à l'axe longitudinal X. Dans cet exemple, chaque bras de support 2 comprend une paroi externe amont 20 et une paroi externe aval 21 de section en forme de U respectivement ouvertes vers l'aval et vers l'amont, de manière à délimiter ensemble une cavité 22 cylindrique de section ovale. En pratique, de même que pour l'atténuateur de vitesse 3, du givre est susceptible de se former et de s'accumuler sur la paroi externe amont 20 des bras de support 2, ce qui perturbe l'admission du flux d'air F dans la canalisation 4.

Selon l'invention et toujours en référence à la [Fig.2], pour éliminer le givre et prévenir son apparition sur les bras de support 2, l'entrée d'air supersonique 5 comprend en outre un (ou plusieurs) dispositif(s) de dégivrage 1 comprenant :
- une paroi interne 10 montée dans la cavité 22 du bras de support 2 en vis-à-vis de la paroi externe amont 20 de manière à délimiter ensemble un volume de dégivrage V calibré,
- une (ou plusieurs) conduite(s) d'alimentation 11 en flux d'air de dégivrage F_{D} du volume de dégivrage V,
- une (ou plusieurs) conduite(s) de refoulement 12 du flux d'air de dégivrage F_{D} du volume de dégivrage V et,
- dans l'exemple de la [Fig.2], un organe de connexion fluidique 13 reliant fluidiquement la conduite d'alimentation 11 et le volume de dégivrage V.

Dans l'exemple de la [Fig.2], un seul bras de support 2 équipé d'un dispositif de dégivrage 1 est représenté à des fins de clarté mais l'entrée d'air supersonique 5 comprend classiquement plusieurs bras de support 2, usuellement trois, de préférence chacun équipés d'un dispositif de dégivrage 1 pour un dégivrage global. On décrit par la suite un unique dispositif de dégivrage 1, cette description étant valable pour les autres.

Dans l'exemple de la [Fig.2], le dispositif de dégivrage 1 comporte une unique conduite d'alimentation 11 et une unique conduite de refoulement 12 par soucis de réduction d'encombrement et de simplicité. La conduite d'alimentation 11 est dans cet exemple propre à un seul dispositif de dégivrage 1, de même que la conduite de refoulement 12. Dans d'autres formes de réalisation de l'invention, la conduite d'alimentation 11 et/ou la conduite de refoulement 12 sont communes ou partiellement communes à plusieurs dispositifs de dégivrage 1. De manière alternative ou complémentaire, la conduite d'alimentation 11 et/ou la conduite de refoulement 12 peuvent également être partiellement communes avec les conduites (non représentées) acheminant le flux d'air de dégivrage F_{D} vers l'atténuateur de vitesse 3, toujours par soucis de réduction d'encombrement et de simplicité.

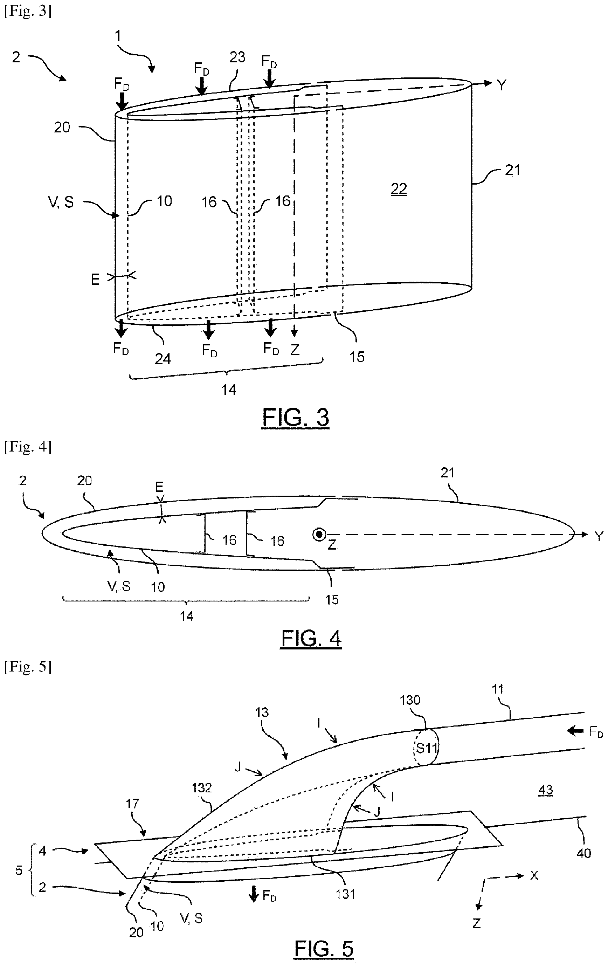

Comme illustré sur la [Fig.2], la conduite d'alimentation 11 est configurée pour prélever le flux d'air de dégivrage F_{D} dans le flux d'air F au niveau du compresseur de la turbomachine 7 et s'étend dans la cavité annulaire 43 de la canalisation 4. La conduite d'alimentation 11 débouche dans l'organe de connexion fluidique 13 et permet ainsi d'injecter le flux d'air de dégivrage F_{D} dans le volume de dégivrage V au niveau d'une ouverture extérieure 23 du bras de support 2 ([Fig.3]) délimitée par la paroi interne 10 et la paroi externe amont 20. La conduite de refoulement 12 est quant à elle configurée pour prélever le flux d'air de dégivrage F_{D} du volume de dégivrage V au niveau d'une ouverture intérieure 24 du bras de support 2 ([Fig.3]) délimitée par la paroi interne 10 et la paroi externe amont 20. La conduite de refoulement 12 s'étend à l'intérieur de l'atténuateur de vitesse 3 de manière à refouler le flux d'air de dégivrage au niveau de son extrémité aval dans le flux d'air F guidé vers la turbomachine 7.

Dans d'autres formes de réalisation de l'invention, la conduite de refoulement 12 débouche, de manière analogue à la conduite d'alimentation 11, au niveau du compresseur de la turbomachine 7. Pour cela, la conduite de refoulement 12 traverse de préférence l'atténuateur de vitesse 3 et l'un des autres bras de support 2 afin de rejoindre la canalisation 4. Il va de soi que la conduite de refoulement 12 pourrait déboucher ailleurs sans que cela ne modifie l'invention. De même, il va de soi que la conduite d'alimentation 11 pourrait prélever le flux d'air de dégivrage F_{D} ailleurs qu'au niveau du compresseur de la turbomachine 7 sans que cela ne modifie l'invention.

Il va de soi que l'alimentation et le refoulement du flux d'air de dégivrage F_{D} pourraient être mis en oeuvre différemment et avec un organe d'alimentation 11 et un organe de refoulement 12 quelconques. A titre d'exemple, l'organe de refoulement 12 pourrait se présenter sous la forme d'une ouverture formée dans la paroi externe amont 20 ou la paroi externe aval 21.

En référence à la [Fig.3], la paroi interne 10 du dispositif de dégivrage 1 s'étend dans la cavité 22 du bras de support 2 depuis l'ouverture extérieure 23 au niveau de la canalisation 4 jusqu'à l'ouverture intérieure 24 au niveau de l'atténuateur de vitesse 3 selon l'axe Z. La paroi interne 10 permet ainsi de guider le flux d'air de dégivrage F_{D} selon l'axe Z sur toute la longueur de la paroi externe amont 20. Comme illustré sur les figures 3 et 4, la paroi interne 10 comprend à l'amont une portion de guidage 14 du flux d'air de dégivrage F_{D} et à l'aval une portion de fixation 15 au bras de support 2, plus précisément au niveau de la jointure entre la paroi externe amont 20 et la paroi externe aval 21. Le volume de dégivrage V ainsi délimité permet de faire circuler le flux d'air de dégivrage F_{D} contre la paroi externe amont 20, pour un dégivrage global. De préférence, la portion de fixation 15 est soudée ou assemblée par des éléments de fixation, tels que des vis, au bras de support 2, de manière à maintenir fixe la paroi interne 10. De préférence, la paroi interne 10 comporte du titane pour une grande résistance mécanique et thermique.

Dans l'exemple des figures 3 et 4, la portion de guidage 14 comporte une forme sensiblement identique à celle de la paroi externe amont 20, à savoir une section transversale en forme de U ouvert vers l'aval. Autrement dit, le volume de dégivrage V comporte une surface transversale S en forme de U ouvert vers l'aval. Le flux d'air de dégivrage F_{D} est ainsi avantageusement concentré contre la paroi externe amont 20 dans un volume de dégivrage V de dimensions restreintes. On précise que le terme « transversal » est ici employé en référence à l'axe Z du bras de support 2, et se définit ainsi comme « orienté selon un axe Y normal à l'axe Z » (figures 3 et 4).

De préférence, le volume de dégivrage V comporte une surface transversale S de valeur sensiblement constante le long de l'axe Z de manière à conserver la vitesse du flux d'air de dégivrage F_{D}. Ceci favorise les échanges thermiques par conduction et par convection avec la paroi externe amont 20. Le volume de dégivrage V comporte de plus une épaisseur E, définie comme la distance radiale séparant la paroi externe amont 20 de la paroi interne 10 par rapport à l'axe Z, qui est sensiblement constante sur tout le pourtour radial de la surface transversale S. L'épaisseur E est préférentiellement inférieure à 30mm et supérieure à 2mm.

Dans l'exemple des figures 3 et 4, le dispositif de dégivrage 1 comporte de plus des éléments de maintien 16 montés dans la cavité 22 du bras de support 2 selon l'axe Z de manière à relier les branches de la paroi interne 10 de section transversale en U. De tels éléments de maintien 16 permettent de maintenir en position la paroi interne 10 en complément de la portion de fixation 15 et de conserver l'épaisseur E du volume de dégivrage V.

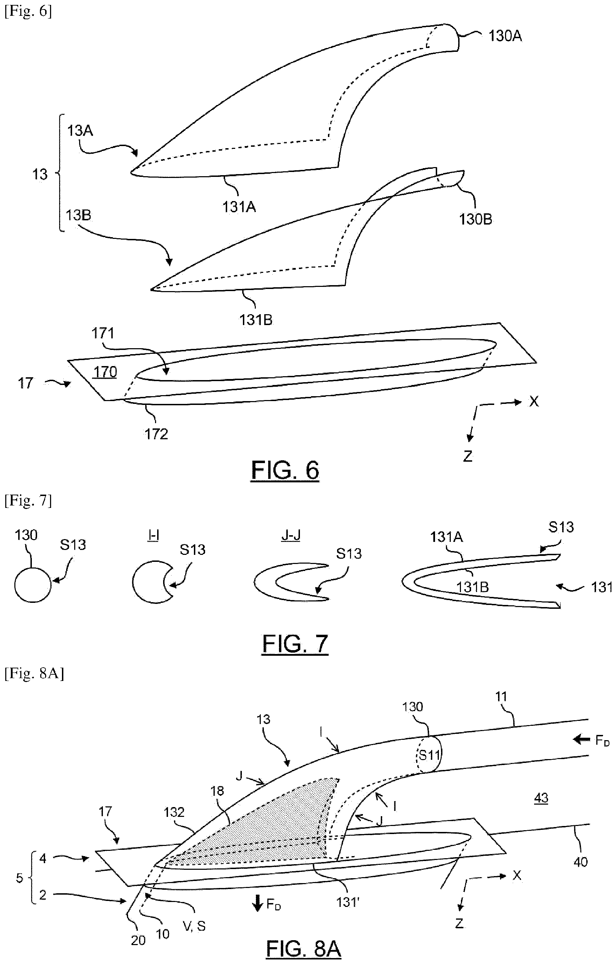

En référence à la [Fig.5], l'organe de connexion fluidique 13 est monté dans la cavité annulaire 43 de la canalisation 4 et se présente sous la forme d'un conduit creux 132 coudé comprenant une ouverture d'entrée 130 débouchant dans la conduite d'alimentation 11 et une ouverture de sortie 131 débouchant au niveau de l'ouverture extérieure 23 dans le volume de dégivrage V. L'organe de connexion fluidique 13 comporte de plus une section évolutive, c'est-à-dire que sa section transversale se modifie progressivement le long de l'organe de connexion fluidique 13 de manière à s'adapter à la section classiquement circulaire de la conduite d'alimentation 11 et à la section en forme de U du volume de dégivrage V. La [Fig.7] illustre la section évolutive de l'organe de connexion fluidique 13 :
- au niveau de l'ouverture d'entrée 130, qui présente une forme circulaire,
- au niveau d'un plan transversal I-I ([Fig.5]) plus proche de l'ouverture d'entrée 130 que de l'ouverture de sortie 131, qui présente une forme circulaire tronquée,
- au niveau d'un plan transversal J-J ([Fig.5]) plus proche de l'ouverture de sortie 131 que de l'ouverture d'entrée 130, qui présente une forme de croissant, et
- au niveau de l'ouverture de sortie 131, qui présente une forme de U, configurée pour coopérer avec l'ouverture extérieure 23.

Une telle section évolutive permet de limiter les pertes de charge du flux d'air de dégivrage F_{D} et donc de lui garantir une vitesse suffisante une fois dans le volume de dégivrage V pour assurer de bons échanges thermiques. Dans l'exemple de la [Fig.7], la surface transversale S13 est sensiblement constante le long de l'organe de connexion fluidique 13. Autrement dit, les quatre sections transversales représentées sur la [Fig.7] délimitent une surface transversale S13 de valeur égale. La valeur de la surface transversale S13 est de plus de préférence égale à celle de la surface transversale S du volume de dégivrage V et à celle de la surface transversale S11 de la conduite d'alimentation 11 pour conserver la vitesse du flux d'air de dégivrage F_{D}.

Comme illustré sur la [Fig.6], la section évolutive de l'organe de connexion fluidique 13 est obtenue grâce à un conduit creux 132 fabriqué à partir d'une portion extérieure 13A et d'une portion intérieure 13B, qui sont assemblées ou soudées ensemble. La portion extérieure 13A comporte une extrémité d'entrée 130A en forme de demi-cercle pour coopérer avec la conduite d'alimentation 11 et une extrémité de sortie 131A en forme de U pour coopérer avec la paroi externe amont 20 du bras de support 2. La portion intérieure 13B comporte quant à elle une extrémité d'entrée 130B en forme de demi-cercle pour coopérer avec la conduite d'alimentation 11 de manière complémentaire à la portion extérieure 13A ainsi qu'une extrémité de sortie 131B en forme de U pour coopérer avec la paroi interne 10. De manière alternative, la portion extérieure 13A et la portion intérieure 13B sont issues de même matière, fabriquées par exemple par impression 3D.

Comme illustré sur les figures 5 et 6, pour favoriser le maintien de l'organe de connexion fluidique 13, le dispositif de dégivrage 1 comprend de plus un organe de liaison 17 comprenant une plaque 170 montée dans la cavité annulaire 43 de la canalisation 4 en appui sur la paroi intérieure 40. La plaque 170 comporte une ouverture 171 se prolongeant en saillie selon l'axe Z de manière à coopérer avec la paroi externe amont 20 et la paroi externe aval 21 du bras de support 2. Plus précisément, l'ouverture 171 comporte une section ovale sensiblement identique à celle de la cavité 22 cylindrique du bras de support 2 au niveau de l'ouverture extérieure 23, pour permettre de les assembler, de préférence par emboîtement selon l'axe Z. L'organe de connexion fluidique 13 s'étend à l'intérieur de l'ouverture 171 de manière à coopérer avec l'ouverture extérieure 23 du volume de dégivrage V.

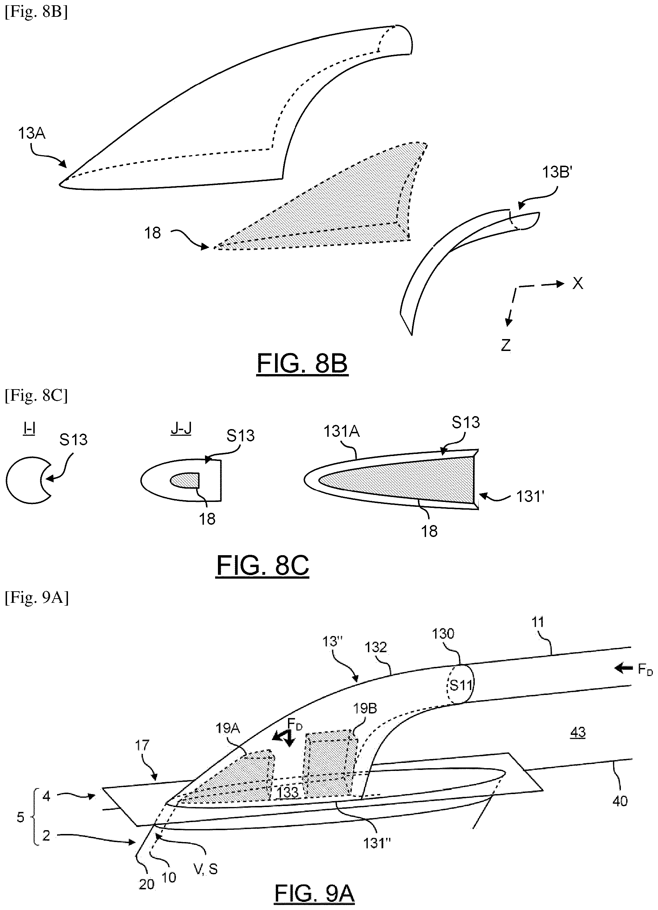

Comme illustré sur les figures 8A, 8B et 8C, selon une forme de réalisation alternative de l'invention, l'organe de connexion fluidique 13' comporte un élément de volume 18 logé à l'intérieur d'un conduit creux 132 de manière à délimiter ensemble la section évolutive de l'organe de connexion fluidique 13'. Dans cette forme de réalisation, le conduit creux 132 possède une section évolutive sensiblement annulaire et l'élément de volume 18 permet de combler partiellement la cavité interne du conduit creux 132 afin de former des sections transversales illustrées à la [Fig.8C] et analogues à celles de la [Fig.7].

Comme illustré sur la [Fig.8A], l'élément de volume 18 est monté de manière à s'étendre dans le prolongement extérieur de la paroi interne 10, afin de guider le flux d'air de dégivrage F_{D} dans le volume de dégivrage V. L'élément de volume 18 comprend de plus une section décroissante vers l'extérieur par rapport à l'axe longitudinal X avec un bord arrondi aérodynamique, pour réduire les pertes de charge dans l'organe de connexion fluidique 13'. De préférence, l'élément de volume 18 délimite une surface transversale S13 de valeur sensiblement constante avec la portion extérieure 13A et la portion intérieure 13B'. Ainsi, comme illustré sur la [Fig.8C], la valeur de la surface transversale S13 dans le plan I-I en forme de disque tronqué est égale à celle dans le plan J-J en forme de D renversé et à celle de l'ouverture de sortie 131' en forme de U ouvert vers l'aval au niveau de l'ouverture extérieure 23. Cette forme de réalisation alternative permet avantageusement d'utiliser un organe de connexion fluidique 13' de forme simplifiée, à savoir dont la portion intérieure 13B' ne coopère pas avec la paroi interne 10 en forme de U mais délimite uniquement en aval l'ouverture de sortie 131'.

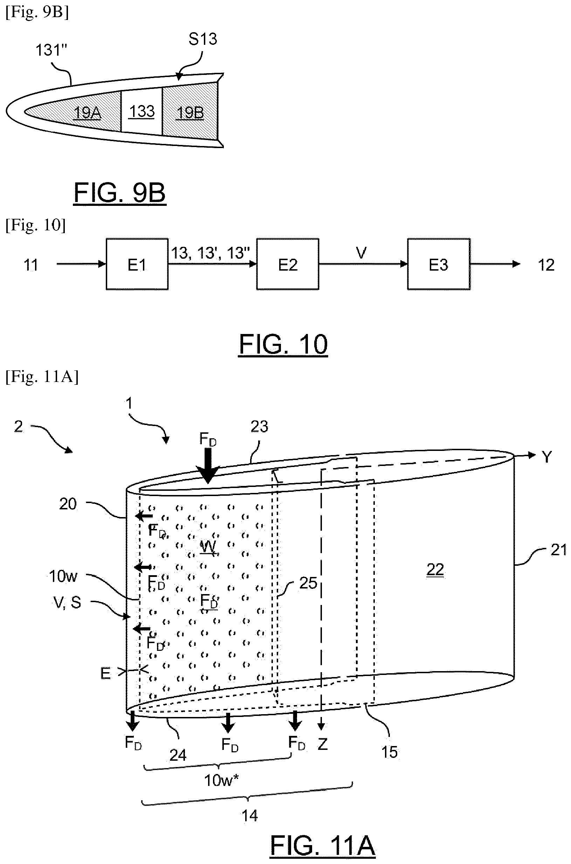

Les figures 9A et 9B illustrent une autre alternative de l'invention dans laquelle l'organe de connexion fluidique 13" comporte, outre l'ouverture de sortie 131" débouchant dans le volume de dégivrage V, une ouverture de sortie auxiliaire 133 pour alimenter en flux d'air de dégivrage F_{D} la cavité 34 de l'atténuateur de vitesse 3. Autrement dit, l'organe de connexion fluidique 13" permet de conduire le flux d'air de dégivrage F_{D} pour le bras de support 2 mais également pour l'atténuateur de vitesse 3.

Plus précisément, l'ouverture de sortie auxiliaire 133 s'étend entre les branches de l'ouverture de sortie 131 en forme de U. L'organe de connexion fluidique 13" comporte de plus deux éléments de volume 19A, 19B délimitant à l'amont et à l'aval l'ouverture de sortie auxiliaire 133. De même que pour l'alternative des figures 8A à 8C, les éléments de volume 19A, 19B comportent une forme aérodynamique pour guider le flux d'air de dégivrage F_{D} et telle que la surface transversale S13 soit sensiblement constante le long de l'organe de connexion fluidique, égale à la somme des surfaces de l'ouverture de sortie 131 et de l'ouverture de sortie auxiliaire 133. On précise que dans cette forme de réalisation, la conduite d'alimentation 11 et l'organe de connexion fluidique 13 sont communs pour le dégivrage du bras de support 2 et de l'atténuateur de vitesse 3. L'organe de connexion fluidique 13 assure la séparation du flux d'air de dégivrage F_{D} délivré dans le volume de dégivrage V et de celui destiné à la cavité 34 de l'atténuateur de vitesse 3, en pratique délivré par une conduite (non représentée) débouchant dans l'ouverture de sortie auxiliaire 133 et dans la cloison interne 33.

Il a été présenté un organe de connexion fluidique 13, 13', 13" selon plusieurs formes de réalisation de l'invention pour relier la conduite d'alimentation 11 et le volume de dégivrage V, voire la cavité 34 de l'atténuateur de vitesse 3. Il va de soi qu'un organe de connexion fluidique 13, 13', 13" pourrait également être prévu pour relier le volume de dégivrage V et la conduite de refoulement 12, voire la cavité 34 de l'atténuateur de vitesse 3. La description précédente reste valable en remplaçant les termes d'ouverture d'entrée 130, d'ouverture de sortie 131, d'ouverture de sortie auxiliaire 133 et de conduite d'alimentation 11 par ceux respectivement d'ouverture de sortie 130, d'ouverture d'entrée 131, d'ouverture d'entrée auxiliaire 133 et de conduite de refoulement 12.

L'invention concerne également un procédé de dégivrage des bras de support 2 d'une entrée d'air supersonique 5 au moyen du dispositif de dégivrage 1 précédemment présenté. En référence à la [Fig.10], le procédé de dégivrage comprend tout d'abord une étape d'alimentation E1 du volume de dégivrage V en flux d'air de dégivrage F_{D}, suivie d'une étape de circulation E2 dans le volume de dégivrage V et enfin d'une étape de refoulement E3 du flux d'air de dégivrage F_{D} hors du volume de dégivrage V.

Comme illustré sur les figures 2 et 10, plus précisément, lors de l'étape d'alimentation E1, le flux d'air de dégivrage F_{D} est acheminé par la conduite d'alimentation 11 de son lieu de prélèvement, dans le flux d'air F au niveau du compresseur de la turbomachine 7 ou autre, jusqu'au volume de dégivrage V. Pour cela, le flux d'air de dégivrage F_{D} traverse la canalisation 4 et l'organe de connexion fluidique 13, 13', 13". La vitesse du flux d'air de dégivrage F_{D} est sensiblement conservée constante grâce à la forme aérodynamique et à la section évolutive de l'organe de connexion fluidique 13, 13', 13".

Comme illustré sur les figures 3 et 10, lors de l'étape de circulation E2, le flux d'air de dégivrage F_{D} circule selon l'axe Z du bras de support 2 dans le volume de dégivrage V au contact de la paroi externe amont 20 de manière à la réchauffer par échanges thermiques, convectifs mais également conductifs, afin de la dégivrer. La vitesse du flux d'air de dégivrage F_{D} est sensiblement conservée constante pour favoriser les échanges thermiques tout le long du volume de dégivrage V.

En référence aux figures 2 et 10, lors de l'étape de refoulement E3, le flux d'air de dégivrage F_{D}, dont la température a diminué pour réchauffer la paroi externe amont 20, rejoint la conduite de refoulement 12 pour être rejeté dans le flux d'air F en aval de l'atténuateur de vitesse 3.

Dans le cas d'un organe de connexion fluidique 13" tel qu'illustré sur les figures 9A et 9B, le procédé permet également de dégivrer la cavité 34 l'atténuateur de vitesse 3 en alimentant de manière commune le volume de dégivrage V et ladite cavité 34.

Pour résumer, l'invention permet de dégivrer et de prévenir l'apparition de givre sur la paroi externe amont 20 des bras de support 2 d'une entrée d'air supersonique 5 d'un ensemble propulsif d'aéronef 8. Le dégivrage est avantageusement efficace et peu encombrant car ciblé au contact de la paroi externe amont 20 et non dans toute la cavité 22 cylindrique des bras de support 2. Pour cela, une paroi interne 10 est ajoutée dans la cavité 22 de manière à délimiter un volume de dégivrage V restreint, où la vitesse du flux d'air de dégivrage F_{D} est sensiblement maintenue constante pour des échanges thermiques efficaces. Un organe de connexion fluidique 13 de section évolutive et constante assure une alimentation optimale en flux d'air de dégivrage F_{D}.

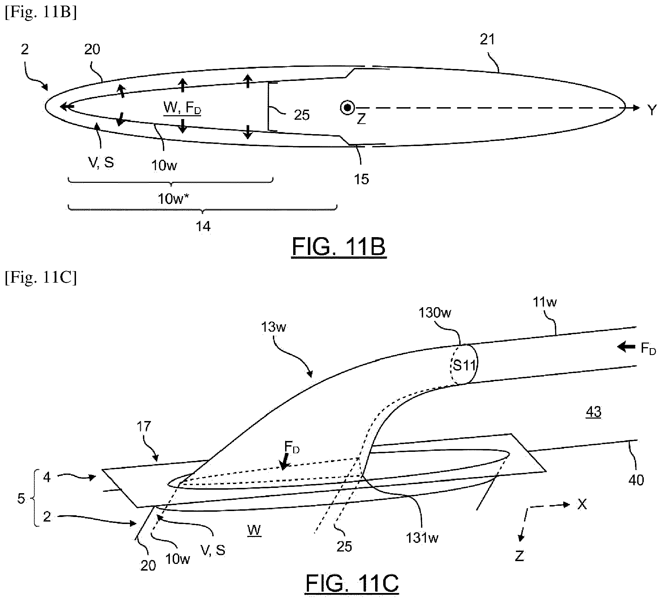

Selon un autre aspect de l'invention, comme illustré sur les figures 11A et 11B, le dispositif de dégivrage 1 diffère de celui décrit précédemment en ce qu'il comprend une cloison interne 25 montée intérieurement à la paroi interne 10w de manière solidaire afin de délimiter ensemble un volume d'approvisionnement W. De plus, la paroi interne 10w comprend en amont de la cloison interne 25 une portion perforée 10w* afin de mettre en communication fluidique le volume d'approvisionnement W et le volume de dégivrage V. Autrement dit, le flux d'air de dégivrage F_{D} est configuré pour être admis dans le volume d'approvisionnement W puis pour traverser la portion perforée 10w* de la paroi interne 10w afin de circuler dans le volume de dégivrage V. La portion perforée 10w* permet ainsi de guider le flux d'air de dégivrage F_{D} au plus près de la paroi externe amont 20 et de l'accélérer au passage des perforations, pour favoriser le dégivrage.

Dans l'exemple des figures 11A et 11B, le volume d'approvisionnement W s'étend de la paroi intérieure 40 de la canalisation 4 jusqu'à l'atténuateur de vitesse supersonique 3 selon l'axe Z orienté vers l'intérieur, autrement dit parallèlement à la cavité interne 22 du bras de support 2. Le volume d'approvisionnement W comporte de plus une section transversale à l'axe Z qui est semi-ellipsoïdale avec un bord effilé incurvé orienté vers l'amont.

En référence à la [Fig.11C], le volume d'approvisionnement W est ouvert au niveau de la paroi intérieure 40 de la canalisation 4 et alimenté en flux d'air de dégivrage F_{D} par l'organe de connexion fluidique 13w. Autrement dit, contrairement aux formes de réalisation précédentes, l'organe de connexion fluidique 13w est configuré pour relier l'organe d'alimentation 11w et le volume d'approvisionnement W. Ainsi, l'ouverture de sortie 131w débouche dans le volume d'approvisionnement W au niveau de l'ouverture extérieure et comporte de préférence une section identique au volume d'approvisionnement W pour assurer leur coopération. On précise que, de même que pour les formes de réalisation précédentes, l'organe de connexion fluidique 13w comporte une section évolutive et une surface transversale de valeur sensiblement constante sur toute sa longueur, égale à la valeur de la surface transversale du volume d'approvisionnement W et celle de la surface transversale S11 de l'organe d'alimentation 11w.

Dans l'exemple de la [Fig.11A], le flux d'air de dégivrage F_{D} est ensuite refoulé du volume de dégivrage V vers l'organe de refoulement 12 ([Fig.2]) de même que dans les formes de réalisation précédentes. De préférence, le volume d'approvisionnement W est fermé au niveau de l'atténuateur de vitesse supersonique 3, de manière à ce que l'ensemble du flux d'air de dégivrage F_{D} dans le volume d'approvisionnement W circule dans le volume de dégivrage V en traversant la portion perforée 10w* de la paroi interne 10.

Par ailleurs, le procédé de dégivrage précédemment décrit diffère pour l'alternative illustrée sur les figures 11A, 11B et 11C en ce que l'étape d'alimentation E1 en flux d'air de dégivrage F_{D} est mise en oeuvre dans le volume d'approvisionnement W. Le volume de dégivrage V est ainsi alimenté indirectement par l'organe d'alimentation 11w, via le volume d'approvisionnement W. Lors de l'étape de circulation E2, le flux d'air de dégivrage F_{D} circule ainsi du volume d'approvisionnement W vers le volume de dégivrage V en traversant la portion perforée 10w* de la paroi interne 10. La circulation E2 du flux d'air de dégivrage F_{D} dans le volume de dégivrage V et l'étape de refoulement E3 sont par ailleurs identiques au procédé de dégivrage précédemment exposé et ne sont donc pas décrites davantage.

## Revendications

1. Entrée d'air supersonique (5) d'un ensemble propulsif d'aéronef (8), ledit ensemble propulsif d'aéronef (8) s'étendant longitudinalement selon un axe (X) orienté d'amont en aval et comprenant une turbomachine (7) configuré pour permettre la propulsion de l'aéronef à des vitesses supersoniques à partir de l'accélération d'un flux d'air (F) subsonique circulant d'amont en aval dans la turbomachine (7), ladite entrée d'air supersonique (5) comprenant :
• une canalisation (4) d'axe longitudinal (X) comprenant une paroi intérieure (40) configurée pour guider le flux d'air (F) dans la turbomachine (7) et une paroi extérieure (41) reliées à l'amont par une lèvre d'entrée d'air (42) et délimitant ensemble une cavité annulaire (43),
• un atténuateur de vitesse (3) monté fixe à l'intérieur de la canalisation (4) selon l'axe longitudinal (X) et comprenant une paroi externe conique (32) avec un bord effilé à l'amont de manière à générer une onde de choc réduisant la vitesse supersonique du flux d'air (F) entrant dans la canalisation (4) en une vitesse subsonique, et
• au moins un bras de support (2) reliant l'atténuateur de vitesse (3) à la canalisation (4), ledit bras de support (2) comprenant une paroi externe amont (20) et une paroi externe aval (21) délimitant ensemble une cavité (22) s'étendant de la paroi intérieure (40) de la canalisation (4) jusqu'à l'atténuateur de vitesse (3) selon un axe (Z) orienté vers l'intérieur,
• entrée d'air supersonique (5) **caractérisée par le fait qu'**elle comprend au moins un dispositif de dégivrage (1) comprenant
• une paroi interne (10) montée dans la cavité (22) du bras de support (2) en vis-à-vis de la paroi externe amont (20) de manière à délimiter ensemble un volume de dégivrage (V) calibré,
• au moins un organe d'alimentation (11) en flux d'air de dégivrage (F_{D}) du volume de dégivrage (V), et
• au moins un organe de refoulement (12) du flux d'air de dégivrage (F_{D}) du volume de dégivrage (V).

2. Entrée d'air supersonique (5) selon la revendication 1, dans laquelle la paroi interne (10) du dispositif de dégivrage (1) comprend une portion de guidage (14) du flux d'air de dégivrage (F_{D}) de forme sensiblement identique à celle de la paroi externe amont (20) du bras de support (2).

3. Entrée d'air supersonique (5) selon l'une des revendications 1 et 2, dans laquelle le volume de dégivrage (V) comporte une surface transversale (S) de valeur sensiblement constante le long de l'axe (Z) du bras de support (2), de préférence en forme de U tourné vers l'aval.

4. Entrée d'air supersonique (5) selon l'une des revendications 1 à 3, dans laquelle le volume de dégivrage (V) s'étend selon l'axe (Z) du bras de support (2) entre une ouverture extérieure (23) formée dans la paroi intérieure (40) de la canalisation (4) et une ouverture intérieure (24) formée dans la paroi de l'atténuateur de vitesse (3), de préférence respectivement d'entrée et de sortie pour le flux d'air de dégivrage (F_{D}).

5. Entrée d'air supersonique (5) selon la revendication 4, dans laquelle le dispositif de dégivrage (1) comprend un organe de connexion fluidique (13, 13', 13") de section évolutive comprenant une ouverture d'entrée (130) débouchant dans l'organe d'alimentation (11) et une ouverture de sortie (131) débouchant dans une ouverture (23, 24) du volume de dégivrage (V), de préférence l'ouverture extérieure (23).

6. Entrée d'air supersonique (5) selon la revendication 5, dans laquelle l'organe de connexion fluidique (13, 13', 13") comporte une surface transversale (S13) de valeur sensiblement constante sur toute sa longueur, de préférence égale à la valeur de la surface transversale (S) du volume de dégivrage (V), préférentiellement égale à la valeur de la surface transversale (S11) de l'organe d'alimentation (11).

7. Entrée d'air supersonique (5) selon l'une des revendications 5 et 6, dans laquelle l'organe de connexion fluidique (13) se présente sous la forme d'un conduit creux (132) délimitant la section évolutive de l'organe de connexion fluidique (13).

8. Entrée d'air supersonique (5) selon l'une des revendications 5 et 6, dans laquelle l'organe de connexion fluidique (13', 13") comprend un conduit creux (132) et au moins un élément de volume (18, 19A, 19B) logé dans le conduit creux (132) de manière à délimiter ensemble la section évolutive de l'organe de connexion fluidique (13', 13").

9. Entrée d'air supersonique (5) selon l'une des revendications 5 à 8, dans laquelle l'atténuateur de vitesse (3) comprend une cloison interne (33) délimitant avec la paroi externe conique (32) une cavité (34), l'organe de connexion fluidique (13") comprenant une ouverture de sortie auxiliaire (133) configurée pour alimenter la cavité (34) de l'atténuateur de vitesse (3) en flux d'air de dégivrage (F_{D}).

10. Procédé de dégivrage d'au moins un bras de support (2) d'une entrée d'air supersonique (5) d'ensemble propulsif d'aéronef (8) selon l'une des revendications 1 à 9, ledit procédé comprenant :
• une étape d'alimentation (E1) du volume de dégivrage (V) en flux d'air de dégivrage (F_{D}) par l'organe d'alimentation (11),
• une étape de circulation (E2) du flux d'air de dégivrage (F_{D}) dans le volume de dégivrage (V), de manière à réchauffer la paroi externe amont (20) du bras de support (2) par échanges thermiques, afin de la dégivrer, et
• une étape de refoulement (E3) du flux d'air de dégivrage (F_{D}) dans l'organe de refoulement (12) hors du volume de dégivrage (V).

## Patentansprüche

1. Überschall-Lufteinlass (5) einer Luftfahrzeug-Antriebsanordnung (8), wobei sich die Luftfahrzeug-Antriebsanordnung (8) längs entlang einer von stromaufwärts nach stromabwärts gerichteten Achse (X) erstreckt und eine Turbomaschine (7) umfasst, die so konfiguriert ist, dass sie den Antrieb des Luftfahrzeugs auf Überschallgeschwindigkeiten auf der Basis der Beschleunigung eines Unterschall-Luftstroms (F), der in der Turbomaschine (7) von stromaufwärts nach stromabwärts zirkuliert, gestattet, wobei der Überschall-Lufteinlass (5) umfasst:
• einen Kanal (4) mit einer Längsachse (X), der eine Innenwand (40) umfasst, die so konfiguriert ist, dass sie den Luftstrom (F) in der Turbomaschine (7) führt, und eine Außenwand (41), die stromaufwärts durch eine Lufteintrittslippe (42) verbunden sind und zusammen einen ringförmigen Hohlraum (43) begrenzen,
• einen Geschwindigkeitsdämpfer (3), der im Inneren des Kanals (4) gemäß der Längsachse (X) fest angebracht ist und eine konische Außenwand (32) mit einer sich stromaufwärts verjüngenden Kante umfasst, um eine Stoßwelle zu erzeugen, die die Überschallgeschwindigkeit des in den Kanal (4) eintretenden Luftstroms (F) auf eine Unterschallgeschwindigkeit reduziert, und
• mindestens einen Stützarm (2), der den Geschwindigkeitsdämpfer (3) mit dem Kanal (4) verbindet, wobei der Stützarm (2) eine stromaufwärts gelegene Außenwand (20) und eine stromabwärts gelegene Außenwand (21) umfasst, die zusammen einen Hohlraum (22) begrenzen, der sich von der Innenwand (40) des Kanals (4) bis zum Geschwindigkeitsdämpfer (3) gemäß einer nach innen gerichteten Achse (Z) erstreckt,
wobei der Überschall-Lufteinlass (5) **dadurch gekennzeichnet ist, dass** er mindestens eine Enteisungsvorrichtung (1) umfasst, die umfasst:
• eine Innenwand (10), die in dem Hohlraum (22) des Stützarms (2) gegenüber der stromaufwärts gelegenen Außenwand (20) so angebracht ist, dass sie gemeinsam ein kalibriertes Enteisungsvolumen (V) begrenzen,
• mindestens ein Organ (11) zur Versorgung des Enteisungsvolumens (V) mit einem Enteisungsluftstrom (F_{D}), und
• mindestens ein Organ (12) zum Ausstoßen des Enteisungsluftstroms (F_{D}) aus dem Enteisungsvolumen (V).

2. Überschall-Lufteinlass (5) nach Anspruch 1, wobei die Innenwand (10) der Enteisungsvorrichtung (1) einen Führungsabschnitt (14) des Enteisungsluftstroms (F_{D}) umfasst, der im Wesentlichen die gleiche Form wie die stromaufwärts gelegene Außenwand (20) des Stützarms (2) hat.

3. Überschall-Lufteinlass (5) nach einem der Ansprüche 1 oder 2, wobei das Enteisungsvolumen (V) eine Querschnittsfläche (S) mit einem im Wesentlichen konstanten Wert entlang der Achse (Z) des Stützarms (2) vorzugsweise in Form eines nach stromabwärts gerichteten U aufweist.

4. Überschall-Lufteinlass (5) nach einem der Ansprüche 1 bis 3, wobei sich das Enteisungsvolumen (V) gemäß der Achse (Z) des Stützarms (2) zwischen einer äußeren Öffnung (23), die in der Innenwand (40) des Kanals (4) ausgebildet ist, und einer inneren Öffnung (24), die in der Wand des Geschwindigkeitsdämpfers (3) ausgebildet ist, erstreckt, vorzugsweise jeweils als Einlass bzw. Auslass für den Enteisungsluftstrom (F_{D}).

5. Überschall-Lufteinlass (5) nach Anspruch 4, wobei die Enteisungsvorrichtung (1) ein Fluidverbindungsorgan (13, 13', 13") mit sich entwickelndem Querschnitt umfasst, das eine Eingangsöffnung (130), die in das Versorgungsorgan (11) mündet, und eine Ausgangsöffnung (131) umfasst, die in eine Öffnung (23, 24) des Enteisungsvolumens (V), vorzugsweise die äußere Öffnung (23), mündet.

6. Überschall-Lufteinlass (5) nach Anspruch 5, wobei das Fluidverbindungsorgan (13, 13', 13") eine Querschnittsfläche (S13) mit einem über seine gesamte Länge im Wesentlichen konstanten Wert aufweist, der vorzugsweise gleich dem Wert der Querschnittsfläche (S) des Enteisungsvolumens (V), vorzugsweise gleich dem Wert der Querschnittsfläche (S11) des Versorgungsorgans (11) ist.

7. Überschall-Lufteinlass (5) nach einem der Ansprüche 5 oder 6, wobei das Fluidverbindungsorgan (13) in Form einer hohlen Leitung (132) vorliegt, die den sich entwickelnden Abschnitt des Fluidverbindungsorgans (13) begrenzt.

8. Überschall-Lufteinlass (5) nach einem der Ansprüche 5 oder 6, wobei das Fluidverbindungsorgan (13', 13") eine hohle Leitung (132) und mindestens ein Volumenelement (18, 19A, 19B) umfasst, das in der hohlen Leitung (132) so untergebracht ist, dass es gemeinsam den sich entwickelnden Querschnitt des Fluidverbindungsorgans (13', 13") abgrenzt.

9. Überschall-Lufteinlass (5) nach einem der Ansprüche 5 bis 8, wobei der Geschwindigkeitsdämpfer (3) eine innere Trennwand (33) umfasst, die mit der konischen Außenwand (32) einen Hohlraum (34) begrenzt, wobei das Fluidverbindungsorgan (13") eine Hilfsausgangsöffnung (133) umfasst, die so konfiguriert ist, dass sie den Hohlraum (34) des Geschwindigkeitsdämpfers (3) mit einem Enteisungsluftstrom (F_{D}) versorgt.

10. Verfahren zum Enteisen von mindestens einem Stützarm (2) eines Überschall-Lufteinlasses (5) einer Luftfahrzeug-Antriebsanordnung (8) nach einem der Ansprüche 1 bis 9, wobei das Verfahren umfasst:
• einen Schritt des Versorgens (E1) des Enteisungsvolumens (V) mit einem Enteisungsluftstrom (F_{D}) durch das Versorgungsorgan (11),
• einen Schritt der Zirkulation (E2) des Enteisungsluftstroms (F_{D}) in dem Enteisungsvolumen (V), um die stromaufwärts gelegene Außenwand (20) des Stützarms (2) durch Wärmeaustausch zu erwärmen, um sie zu enteisen, und
• einen Schritt des Ausstoßens (E3) des Enteisungsluftstroms (F_{D}) im Ausstoßorgan (12) aus dem Enteisungsvolumen (V).

## Claims

1. Supersonic air inlet (5) of an aircraft propulsion assembly (8), said aircraft propulsion assembly (8) extending longitudinally along an axis (X) oriented from upstream to downstream and comprising a turbine engine (7) configured to enable propulsion of the aircraft at supersonic speeds from the acceleration of a subsonic air flow (F) circulating from upstream to downstream in the turbine engine (7), said supersonic air inlet (5) comprising:
• a pipe (4) with a longitudinal axis (X) comprising an inner wall (40) configured to guide the air flow (F) into the turbine engine (7) and an outer wall (41) connected upstream by an air inlet lip (42) and together delimiting an annular cavity (43),
• a speed reducer (3) fixedly mounted inside the pipe (4) along the longitudinal axis (X) and comprising a conical external wall (32) with an upstream tapered edge so as to generate a shock wave reducing the supersonic speed of the air flow (F) entering the pipe (4) to a subsonic speed, and
• at least one support arm (2) connecting the speed reducer (3) to the pipe (4), said support arm (2) comprising an upstream external wall (20) and a downstream external wall (21) together delimiting a cavity (22) extending from the inner wall (40) of the pipe (4) to the speed reducer (3) along an axis (Z) directed inwards,
• a supersonic air inlet (5) **characterized in that** it comprises at least one de-icing device (1) comprising:
• an internal wall (10) mounted in the cavity (22) of the support arm (2) opposite the upstream external wall (20) so as to delimit together a calibrated de-icing space (V),
• at least one member (11) for supplying the de-icing space (V) with a de-icing air flow (F_{D}), and
• at least one member (12) for discharging the de-icing air flow (F_{D}) from the de-icing space (V).

2. Supersonic air inlet (5) according to claim 1, wherein the internal wall (10) of the de-icing device (1) comprises a guide portion (14) for the de-icing air flow (F_{D}) substantially identical in shape to that of the upstream external wall (20) of the support arm (2).

3. Supersonic air inlet (5) according to one of claims 1 and 2, wherein the de-icing space (V) has a cross-sectional area (S) of substantially constant value along the axis (Z) of the support arm (2), preferably U-shaped facing downstream.

4. Supersonic air inlet (5) according to one of claims 1 to 3, wherein the de-icing space (V) extends along the axis (Z) of the support arm (2) between an outer opening (23) formed in the inner wall (40) of the pipe (4) and an inner opening (24) formed in the wall of the speed reducer (3), preferably as inlet and outlet respectively for the de-icing air flow (F_{D}).

5. Supersonic air inlet (5) according to claim 4, wherein the de-icing device (1) comprises a fluidic connection member (13, 13', 13") of evolving cross-section comprising an inlet opening (130) opening into the supply member (11) and an outlet opening (131) opening into an opening (23, 24) of the de-icing space (V), preferably the outer opening (23).

6. Supersonic air inlet (5) according to claim 5, wherein the fluidic connection member (13, 13', 13") has a cross-sectional area (S13) of substantially constant value over its entire length, preferably equal to the value of the cross-sectional area (S) of the de-icing space (V), preferably equal to the value of the cross-sectional area (S11) of the supply member (11).

7. Supersonic air inlet (5) according to one of claims 5 and 6, wherein the fluidic connection member (13) is in the form of a hollow duct (132) delimiting the evolving section of the fluidic connection member (13).

8. Supersonic air inlet (5) according to one of claims 5 and 6, wherein the fluidic connection member (13', 13") comprises a hollow duct (132) and at least one space element (18, 19A, 19B) housed in the hollow duct (132) so as to delimit together the evolving section of the fluidic connection member (13', 13").

9. Supersonic air inlet (5) according to one of claims 5 to 8, wherein the speed reducer (3) comprises an internal bulkhead (33) delimiting a cavity (34) with the conical external wall (32), the fluidic connection member (13") comprising an auxiliary outlet opening (133) configured to supply the cavity (34) of the speed reducer (3) with a de-icing air flow (F_{D}).

10. Method for de-icing at least one support arm (2) of a supersonic air inlet (5) of an aircraft propulsion assembly (8) according to one of claims 1 to 9, said method comprising:
• a step (E1) of supplying the de-icing space (V) with a de-icing air flow (F_{D}) via the supply member (11),
• a step (E2) of circulating the de-icing air flow (F_{D}) in the de-icing space (V), so as to heat the upstream external wall (20) of the support arm (2) by heat exchange, in order to de-ice it, and
• a step (E3) of discharging the de-icing air flow (F_{D}) in the discharge member (12) out of the de-icing space (V).
